# EUROPEAN PATENT SPECIFICATION

(11) **EP 4 060 681 B1**
(45) Date of publication and mention of the grant of the patent: **02.07.2025**
(21) Application number: 20957031.6
(22) Date of filing: 14.10.2020
(51) Int. Cl.: G21C 19/48, G21C 19/50, C01G 43/025, C01G 43/06, C01G 56/00, C22B 7/00, C22B 59/00, C22B 60/02, C22B 60/04

(54) **SPENT FUEL DRY REPROCESSING METHOD BASED ON PLASMA**
PLASMA-BASIERTES TROCKENWIEDERAUFARBEITUNGSVERFAHREN FÜR VERBRAUCHTEN BRENNSTOFF
PROCÉDÉ DE RETRAITEMENT À SEC POUR COMBUSTIBLE ÉPUISÉ À BASE DE PLASMA

(43) Date of publication of application: 21.09.2022
(73) Proprietor: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: CHEN, Mingzhou, Shenzhen, Guangdong 518031 (CN); LIU, Xiajie, Shenzhen, Guangdong 518031 (CN); HUANG, Wenyou, Shenzhen, Guangdong 518031 (CN); ZHOU, Jiang, Shenzhen, Guangdong 518031 (CN); LU, Jie, Shenzhen, Guangdong 518031 (CN); LI, Qing, Shenzhen, Guangdong 518031 (CN); YANG, Wu, Shenzhen, Guangdong 518031 (CN); ZHANG, Ziwei, Shenzhen, Guangdong 518031 (CN); WEI, Huanyi, Shenzhen, Guangdong 518031 (CN)
(74) Representative: Westphal, Mussgnug & Partner, Patentanwälte mbB
(86) International application number: PCT/CN2020/120792
(87) International publication number: WO 2022/077250

(56) References cited:
- WO-A1-93/03997
- WO-A1-97/27595
- WO-A1-97/27595
- WO-A1-97/34685
- CN-A- 101 593 566
- CN-A- 103 337 265
- CN-A- 107 177 744
- CN-A- 108 303 306
- CN-A- 108 389 634
- US-B2- 7 172 741

## Description

### Technical Field

The present disclosure relates to the technical field of nuclear power fuel, more particularly, to a spent fuel dry reprocessing method based on plasma.

### Background Art

In a nuclear power plant, a spent fuel further includes fission products (FP) such as an alkali metal element (AM), an alkaline earth metal elements (AEM), a platinum element and the like, in addition to transuranium elements (TRU) such as U, Pu and the like. By utilizing an appropriate process to reprocess the spent fuel to separate the U and the Pu from the spent fuel, fissionable materials can be recovered, economic benefits can be improved, and the volume of the spent fuel to be processed subsequently can be greatly reduced.

Through the development of more than half a century, an aqueous reprocessing process represented by PUREX process is becoming increasingly perfect. However, with the expansion of the spent fuel reprocessing scale, significant drawbacks of the aqueous process have become more and more prominent. Since a liquid acid is used to dissolve the spent fuel, a large amount of radioactive aqueous and organic salt solutions are produced, and thus a large amount of high level waste (HLW) to be stored is accumulated. Complex treatments need to be conducted to the high level liquid waste: firstly dehydrating, and then converting into a micro-soluble compound (glass) state, or other solid state that is convenient for storage or disposal. For such a spent nuclear fuel reprocessing process using the aqueous solution and the organic solution, the increase in scale thereof is more and more difficult to meet the industrial safety and nuclear safety requirements in production. On another hand, the hydrochemical process has significant limitations on the spent fuel of a novel reactor: an inability to handle advanced oxide fuels, including an inert matrix fuel, a high burnup fuel, and a fuel with a high Pu content and a short cooling time.

Hitachi proposed a FLUOREX process (US7,445,760 B2) combined a fluoride volatility method with the aqueous reprocessing process, which is consisted of "dry" and "wet" steps: firstly, the U in the spent fuel is converted into UF₆ and separated from the Pu, the FP and so on, and meanwhile, the Pu is controlled to be non-volatile; the not volatilized U, the Pu, the FP and the like are converted into oxides, and then dissolved with nitric acid, and then a separation process is carried out by using the aqueous PUREX process. The Pu is kept in the non-volatile state in the FLUOREX process, and then recovered by the aqueous process, thereby the problem of low Pu yield in the original fluoride volatility method is avoided. The fluoride volatility step can remove more than 90% of the U in the spent fuel, and the process drastically reduces the burden of the subsequent PUREX process by separating a large amount of the uranium first. However, there is still an aqueous process link in the above process, the production of the high level liquid waste is inevitable, and the economy of the "dry" and "wet" combination process is to be verified.

A dry reprocessing technique in the full sense mainly includes a fluoride volatility method or a metal molten extraction method, and has the following advantages:
(1) There is no problem of radiation decomposition of the extraction solvent, and meanwhile, the spent fuel with a deep burnup and a short cooling time can be reprocessed;
(2) Conversion links of a solid state to an aqueous solution to a solid state that are necessary for the aqueous process are reduced or even eliminated, thus the process and the equipment are simplified;
(3) The amount of the waste is less, and the main form thereof is a solid state, thus is easier to be stored, processed and disposed;
(4) Due to the absence of the neutron moderating material, the critical problem of the process equipment is alleviated, and the cost is reduced;
(5) Compared with the aqueous process, the volume of the material required for the dry method operation is reduced, and the process equipment can be minimized; and
(6) The alloy material can be recovered directly.

The fluoride volatility method is based on special properties of that the uranium, the plutonium and the neptunium are converted into a volatile hexafluoride form, while most fission products (lanthanides) and transplutonium elements existing in the spent fuel are converted into non-volatile trifluoride. These properties form several processes based on the spent fuel fluorinated by a strong fluorinating agent (such as BrF₃, BrF₅, ClF₃, NF₃ and even pure F₂).

In the field of the reprocessing, the fluoride volatility method is considered to be a promising advanced thermochemical reprocessing technology, which can process not only the spent fuel in light water reactors, but also the spent fuel difficult to be processed by the wet process, including: the oxide spent fuel of the fast reactor of the fourth-generation reactor, and advanced oxide fuel types (such as a fuel with an inert matrix, and/or, a fuel with a high burnup, a high plutonium content and an extremely short cooling time), and the spent nuclear fuel types of a nitride, a carbide, an alloy or the like, are pre-oxidized into oxide.

Depending on different types of the medium, the fluoride volatility method can be sorted as a molten salt fluorination method and a gas direct fluorination method. In all known dry pyrochemical reprocessing processes, only the gas direct fluorination method, that is, the gas flame fluorination technology, is the only one method not based on the molten salt, by merely using a simple fluorinating agent and an adsorbent, the required performance and productivity can be achieved, the set quality of the amount of fissile materials recovered can be achieved, and the minimum amount of the radioactive waste is produced, thus the industrial safety and the nuclear safety is improved, and the negative influence on the environment is dramatically reduced. In addition, almost all the fissile materials (UF₆, PuF₆) participate directly in most processes and operation links, with no externally added diluting agent, solvent and the like, so equipments and arrangements thereof used in the process procedure can be very compact.

However, two problems of the direct fluorination method should be overcome: one is that the temperature is high and the time is long when fluorinating, and the corrosion of the fluorination gas (F₂ or HF) to the equipment is serious; the other one that is the balance constant of the chemical balance PuF₆ ↔ PuF₄ + F₂ is large under the fluorination temperature of the plutonium, the stability of the PuF₆ itself is poor, thus a decomposition of the PuF₆ occurs while fluorinating, a gas channel is blocked by the PuF₄, and the recovery rate of the plutonium is reduced. To solve these problems, the rate of the fluoridation should be increased, and appropriate cooling measures should be taken to prevent the thermal decomposition of the PuF₆ in terms of dynamics.

In the process of the flame fluorination of the spent fuel, due to the fission products existing in the spent fuel, and a short processing time, the conversion of the 3 components in the spent fuel into the hexafluoride cannot be fully realized, and these components reside in a slag in a form of lower valent fluorides. Basically, the powder of these fluorides is collected in a collection container, but at most 20% of the powder deposits on the walls of the reactor. In order to clean the slag from reactor, the reactor must be dismantled and thus the operation is complex and difficult.

Publications WO 97/27595 A1, WO 97/34685 A1 and WO 93/03997 A1 are considered to be relevant to the present application.

### Summary

A technical problem to be solved by the present disclosure is to provide a spent fuel dry reprocessing method based on plasma.

A technical solution adopted by the present disclosure to solve the technical problem is to provide a spent fuel dry reprocessing method based on plasma, including the following steps:
S1, processing a spent fuel after removal of a cladding thereof into a spent fuel powder, and sending the spent fuel powder into a plasma reactor;
S2, fully mixing and reacting the spent fuel powder with a plasma containing F atoms in the plasma reactor, to generate a product including volatile fluorides and non-volatile fluorides; wherein in the step S2, the plasma containing F atoms is generated by conversion of a fluorination medium; wherein the fluorination medium includes one or more gases of CF₄, NF₃, F₂, HF, BrF₃, BrF₅, ClF₃, and SF₆;
S3, rapidly cooling the product at a cooling rate of 10⁴ K/s to 10⁹ K/s, to generate a gas-solid two-phase flow and a solid-state product;
S4, filtering the gas-solid two-phase flow to remove a solid-state product therein, then carrying out condensation, adsorption, desorption and distillation, to obtain a mixed gas containing UF₆ and PuF₆;
S5, performing a recovery process to the mixed gas to generate a corresponding oxide or metal.

Preferably, in the step S1, the spent fuel powder is delivered into the plasma reactor through a scroll feeder or a nozzle under an action of an inert carrier gas.

Preferably, in the step S1, the spent fuel powder has a particle diameter of no larger than 200 *µ* m.

Preferably, in the step S2, the plasma containing F atoms is generated by conversion of the fluorination medium via gas discharge and then delivered into the plasma reactor; or, the plasma containing F atoms is generated by conversion of the fluorination medium in the plasma reactor.

Preferably, the plasma containing F atoms is generated by at least one of a high-voltage discharge, a DC-arc discharge, a high-frequency discharge, a microwave discharge and a laser ionization.

Preferably, in the step S2, when the fluorination medium is F₂, chemical reaction formulas of UO₂ and U₃O₈ in the spent fuel powder reacting in the plasma reactor are represented by the following formulas (1) and (2):

UO₂+3F₂→UF₆+O₂ (1)

U₃O₈+9F₂→3UF₆+4O₂ (2)

chemical reaction formulas of PuO₂ in the spent fuel powder reacting in the plasma reactor are represented by the following formulas (3) to (5):

   PuO₂+2F₂→PuF₄+O₂ (3)

   PuO₂+3F₂→PuF₆+O₂ (4)

   PuF₄+F₂↔PuF₆ (5)
wherein, the PuF₄ generated according to the formula (3) then reacts with a sufficient F₂ to promote the reaction of the formula (5) to the right end, so that the PuF₄ is completely converted into the PuF₆;
a chemical reaction formula of lanthanide in the spent fuel powder reacting in the plasma reactor is represented by the following formula:

   2Ln₂O₃+6F₂→4LnF₃+3O₂ (6)
and chemical reaction formulas of minor actinides in the spent fuel powder reacting in the plasma reactor are represented by the following chemical formulas:

   NpO₂+3F₂→NpF₆+O₂ (7)

   NpO₂+2F₂→NpF₄+O₂ (8)

   NpF₄+F₂↔ NpF₆ (9)

   2Am₂O₃+6F₂→4AmF₃+3O₂ (10)

   2Cm₂O₃+6F₂→4CmF₃+3O₂ (11)
wherein, the NpF₄ generated according to the formula (8) then reacts with a sufficient F₂ to promote the reaction of the formula (9) to the right end, so that the NpF₄ is completely converted into the NpF₆.

Preferably, in the step S2, a temperature of a reaction region in the plasma reactor is larger than 2000K; and a temperature of a wall of the plasma reactor is controlled below 950K.

Preferably, the step S5 includes: performing a dry or wet processing to the mixed gas of the UF₆ and the PuF₆ to obtain a mixed oxide of UO₂ and PuO₂, and HF; or,
the step S5 includes: separating the UF₆ and the PuF₆ of the mixed gas, performing a dry or wet processing to the UF₆ to obtain UO₂ and HF, and performing a dry or wet processing to the PuF₆ to obtain PuO₂ and HF.

Preferably, the step S5 includes: performing an electromagnetic separation processing to the mixed gas of the UF₆ and the PuF₆ to obtain U, Pu, and F₂; or,
the step S5 includes: separating the UF₆ and the PuF₆ of the mixed gas, performing an electromagnetic separation processing to the UF₆ to obtain metal U and F₂, and performing an electromagnetic separation processing to the PuF₆ to obtain metal Pu and F₂.

Preferably, the spent fuel dry reprocessing method further includes the following step:
S6, performing a recovery process to the solid-state product obtained from separation in the step S3 and the step S4.

The spent fuel dry reprocessing method based on plasma of the present disclosure, compared with the traditional operation processes such as hydrochemical process dissolution, deposition, filtration and the like, avoids the production of a large amount of radioactive waste liquid, and thereby solves the problem of storing and processing the large amount of waste liquid; through the reaction of F atom of the plasma with U, Pu and other elements in the spent fuel, compared with flame fluorination process, the plasma has effects of a wider temperature range and a stronger activity of the fluorinating agent, a complete conversion of Pu to PuF₆ is realized, the problem of separation of Pu from the fluoride of the fission product is solved, the separation of U and Pu from the fission products is promoted, the recovery rate is improved, and the process is simplified.

The method of the present disclosure has a wide range of applications, is fitted for processing spent fuels of fast breeder reactors, thermal reactors and other types of advanced reactors, and is fitted for various types of spent fuels, including oxide, nitride, carbide and metal and the like. The process is simple, and the secondary waste is less. Compared to other fluorination methods, the reaction rate of the method is higher, and the temperature is easier to control (by controlling the atomic density of reactant by discharge power, to control the reaction rate; controlling according to components, temperatures of the ion, the electron and the neutral atom being controlled respectively), a maximum conversion of Pu is realized, and it is beneficial to generate a closed nuclear fuel cycle structure.

### Brief Description of the Drawings

The present disclosure will now be further described with reference to the accompanying drawings and embodiments, and in the drawings:

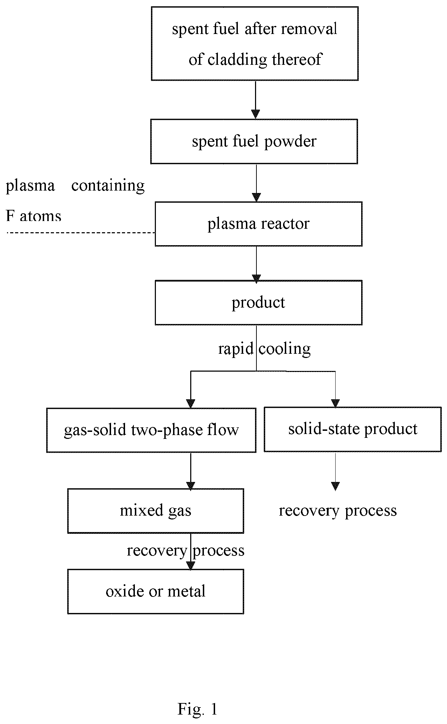

Fig. 1 is a schematic flow diagram of a spent fuel dry reprocessing method based on plasma of an embodiment of the present disclosure.

### Detailed Description

With reference to Fig. 1, a spent fuel dry reprocessing method based on plasma of an embodiment of the present disclosure, includes the following steps:
S1, processing a spent fuel after removal of a cladding into a spent fuel powder, and sending the spent fuel powder into a plasma reactor.

Wherein, the processing of the spent fuel after removal of the cladding may utilize, but not limited to, a mechanical processing, the spent fuel after removal of the cladding is grinded into the powder, that is, the spent fuel powder. The spent fuel powder has a particle diameter of no larger than 200 *µ* m, preferably.

The spent fuel powder may be delivered into the plasma reactor through a nozzle under an action of a carrier gas. The carrier gas adopts an inert gas, without chemical reaction with the conveyed material (spent fuel powder). Of course, the spent fuel powder may alternatively be delivered into the plasma reactor by mechanical delivery (such as a scroll feeder).

S2, fully mixing and reacting the spent fuel powder with a plasma containing F atoms in the plasma reactor, to generate a product including volatile fluorides and non-volatile fluorides.

Wherein, the plasma containing F atoms is generated by conversion of a fluorination medium, and may be generated by gas discharge conversion of the fluorination medium in advance and then placed into the plasma reactor; or alternatively, the plasma containing F atoms is generated by conversion of the fluorination medium in the plasma reactor.

Outside the plasma reactor, the plasma containing F atoms may be generated by at least one of a high-voltage discharge, a DC-arc discharge, a high-frequency discharge, and a microwave discharge. In the plasma reactor, the plasma containing F atoms may be generated by at least one of a high-voltage discharge, a DC-arc discharge, a high-frequency discharge, a microwave discharge and a laser ionization. The fluorination medium as the plasma includes one or more gases of CF₄, NF₃, F₂, HF, BrF₃, BrF₅, ClF₃, and SF₆.

A temperature of a reaction region in the plasma reactor is larger than 2000K. A temperature of a wall of the plasma reactor is controlled below 950K, or below 550°C, to reduce the risk of being corroded.

Typically, elements contained in the spent fuel powder include uranium (U), plutonium (Pu), lanthanide (Ln), and minor actinides (for example, neptunium Np, americium Am, curium Cm), and so on. After reacting with the plasma, wherein U is converted into UF₆ (non-volatile fluoride), Pu eventually is converted into PuF₆ (non-volatile fluoride), most of the fission products (such as Sr, Ba, Y, Cs and lanthanides) are converted into non-volatile fluoride, and a fraction of the fission products (such as Nb, Ru, Te, Mo, I and minor actinides) are converted into volatile fluoride.

Taking F₂ as the fluorination medium as an example, chemical reactions occurring in the plasma reactor are described in detali herebelow, and the reaction mechanism is similar when the fluorination medium takes other fluorine source gas.

When the fluorination medium is F₂, the chemical reactions of UO₂ and U₃O₈ in the spent fuel powder reacting in the plasma reactor are represented by the following formulas (1) and (2):

UO₂ (s) +3F₂ (g) →UF₆ (g) +O₂ (g) (1)

U₃O₈ (s) +9F₂ (g) →3UF₆ (g) +4O₂ (g) (2)

In practice, the fluorination medium reacts with UO₂ and U₃O₈ in a state of atomic F in the plasma reactor, and the reaction rate is faster, and therefore, the above formulas (1) and (2) are respectively represented by the following formulas (1.1) and (2.1):

UO₂ (s) +6F (p) →UF₆ (g) +O₂ (g) (1.1)

U₃O₈ (s) +18F (p) →3UF₆ (g) +4O₂ (g) (2.1)

The chemical reactions of PuO₂ in the spent fuel powder reacting in the plasma reactor are represented by the following formulas (3) to (5):

PuO₂ (s) +2F₂ (g) →PuF₄ (s) +O₂ (g) (3)

PuO₂ (s) +3F₂ (g) →PuF₆ (g) +O₂ (g) (4)

PuF₄ (s) +F₂ (g) ↔PuF₆ (g) (5)

Wherein, the PuF₄ generated according to the formula (3) then reacts with a sufficient F₂ to promote the reaction of the formula (5) to the right end, so that the PuF₄ is completely converted into the PuF₆.

In practice, the fluorination medium reacts with the PuO₂ in the state of atomic F in the plasma reactor, and the reaction rate is faster, and therefore, the above formulas (3) to (5) are represented by the following formulas (3.1) to (5.1), respectively:

PuO₂ (s) +4F (p) →PuF₄ (s) +O₂ (g) (3.1)

PuO₂ (s) +6F (p) →PuF₆ (g) +O₂ (g) (4.1)

PuF₄ (s) +2F (p) ↔PuF₆ (g) (5.1)

The chemical reaction of the lanthanide in the spent fuel powder reacting in the plasma reactor is represented by the following chemical formula:

2Ln₂O₃ (s) +6F₂ (g) -4LnF₃ (s) +3O₂ (g) (6)

Corresponding to the state of atomic F, the formula (6) is represented by the following formula (6.1) in practice:

2Ln₂O₃ (s) +12F (p) -4LnF₃ (s) +3O₂ (g) (6.1)

The chemical reactions of the minor actinides in the spent fuel powder reacting in the plasma reactor are represented by the following chemical formulas:

NpO₂ (s) +3F₂ (g) →NpF₆+O₂ (g) (7)

NpO₂ (s) +2F₂ (g) →NpF₄ (s) +O₂ (g) (8)

NpF₄ (s) +F₂ (g) ↔ NpF₆ (g) (9)

2Am₂O₃ (s) +6F₂ (g) →4AmF₃ (s) +3O₂ (g) (10)

2Cm₂O₃ (s) +6F₂ (g) →4CmF₃ (s) +3O₂ (g) (11)

Wherein, the NpF₄ generated according to the formula (8) then reacts with a sufficient F₂ to promote the reaction of the formula (9) to the right end, so that the NpF₄ is completely converted into the NpF₆.

Corresponding to the state of atomic F, the formulas (7) to (11) are respectively represented by the following formulas (7.1) to (11.1), in practice:

NpO₂ (s) +6F (p) →NpF₆+O₂ (g) (7.1)

NpO₂ (s) +4F (p) →NpF₄ (s) +O₂ (g) (8.1)

NpF₄ (s) +2F (p) ↔ NpF₆ (g) (9.1)

2Am₂O₃ (s) +12F (p) →4AmF₃ (s) +3O₂ (g) (10.1)

2Cm₂O₃ (s) +12F (p) →4CmF₃ (s) +3O₂ (g) (11.1)

In the above formulas, "(s)" and "(g)" respectively represent a solid state and a gas state, and "(p)" represents a plasma state; the solid-state fluorination product (such as LnF₃, AmF₃, or CmF₃) is a non-volatile fluoride, and other gas-state fluorination product is a volatile fluoride.

S3, rapidly cooling the product at a cooling rate of 10⁴ K/s to 10⁹ K/s, to generate a gas-solid two-phase flow and a solid-state product.

Wherein, the product obtained in the step S2 may pass through a rapid cooling area, and the product may be cooled by being rapidly mixed with a cold air flow or by a gas dynamics nozzle in the rapid cooling area, with the cooling rate of 10⁴ K/s to 10⁹ K/s, and meanwhile, along with a flow velocity change, to realize a preliminarily separation of the gas phase from the solid phase, so as to obtain the gas-solid two-phase flow and the solid-state products.

The solid-state products mainly include the fluorination product of the minor actinides such as LnF₃, AmF₃, CmF₃ and so on. In the gas-solid two-phase flow, the gas phase products may include the gaseous fluorination products in the above formulas (1) to (11), such as UF₆ and PuF₆; and the mixed solid-state products may include the fluorination products of minor actinides such as LnF₃, AmF₃, CmF₃ and so on.

S4, filtering the gas-solid two-phase flow to remove the solid-state products therein, followed by condensation, adsorption, desorption and distillation, to obtain a mixed gas containing UF₆ and PuF₆.

In the step S4, the solid-state products (such as LnF₃, AmF₃, CmF₃ and so on) in the gas-solid two-phase flow are separated from the gas phase products by filtration. The filtration may adopt a fine-pore filter equipment, for example a sintered metal filter or a combination with other filter, etc.

The condensation, adsorption, desorption and distillation are conducted to the gas phase products. Wherein, the purpose of the condensation may be to realize a separation of the fluorination products of U, Pu, and Np from the other fluorination products, with a condensation temperature below 350K. The adsorption may adopt a fluoride adsorbent, such as NaF or MgF₂, with an adsorption temperature of 300K to 400K. After the adsorption, the desorption may be realized when the temperature is up to 600K to 700K. In the above adsorption and desorption, the NpF₆ contained in the gas phase products may be adsorbed and removed, thus the mixed gas containing the UF₆ and the PuF₆ is obtained.

S5, performing a recovery process to the mixed gas to generate a corresponding oxide or metal.

As an option, the mixed gas may be recovered and processed to generate the oxide, with a method as following: the mixed gas of the UF₆ and the PuF₆ may be processed by dry or wet processing to obtain a mixed oxide of the UO₂ and the PuO₂, and the HF.

Or alternatively, the UF₆ and the PuF₆ of the mixed gas may be separated; the UF₆ may be processed by dry or wet processing to obtain the UO₂ and the HF; and the PuF₆ may be processed by dry or wet processing to obtain the PuO₂ and the HF. The separation of the UF₆ and the PuF₆ can be conducted in a heating up manner, and the PuF₆ may volatilize so as to be separated from the UF₆.

In the above options, the dry processing is preferred to be adopted: the UF₆ and the PuF₆ respectively react with vapor to directly generate UO₂, HF and PuO₂, HF respectively. Taking the UF₆ as an example, the reaction formula is as following:

UF₆(g)+H₂(g)+H₂O(g)→UO₂+6HF(g)

As another option, the mixed gas may be recovered and processed to generate the metal, with a method as following: the mixed gas of the UF₆ and the PuF₆ may be processed by electromagnetic separation to obtain alloys of U and Pu, and F₂.

Or alternatively, the UF₆ and the PuF₆ of the mixed gas may be separated; the UF₆ may be processed by electromagnetic separation to obtain the metal U and F₂; and the PuF₆ may be processed by electromagnetic separation to obtain the metal Pu and F₂.

The electromagnetic separation processing may be implemented using the prior art, and may refer to WO 97/34685, etc.

The oxide and the HF, the metal and the F₂ obtained by recovery may be respectively sent back to relevant sections for reuse. For example, the mixed oxide of the UO₂ and the PuO₂ recovered as described above, after supplied with the uranium (usually depleted uranium oxide), may pass through a nuclear fuel processing section to generate a mixed oxide fuel (MOX fuel). The HF and the F₂ can be used as a fluorine source to be returned to the plasma reactor.

Furthermore, the spent fuel dry reprocessing method of the present disclosure further may include the following steps:
S6, performing a recovery process to the solid-state products obtained from separation in the step S3 and the step S4.

The solid-state products obtained from separation in the step S3 and the step S4 mainly includes fluorination products of minor actinides such as LnF₃, AmF₃, CmF₃ and so on.

The recovery process may include a stabilization process or a consumption process to the solid-state products, products convenient for storage or disposal may be generated after the stabilization process is conducted; the consumption process is to apply the solid-state products to a fast neutron reactor and the like.

The above are only embodiments of the present disclosure, and thus do not limit the scope of the present disclosure. Any equivalent structure or equivalent process made by referencing the description and drawings of the present disclosure, or directly or indirectly applied in other related technical fields, shall fall within the scope of the present disclosure.

## Claims

1. A spent fuel dry reprocessing method based on plasma, wherein the method comprises steps of:
S1, processing a spent fuel after removal of a cladding thereof into a spent fuel powder, and sending the spent fuel powder into a plasma reactor;
S2, fully mixing and reacting the spent fuel powder with a plasma containing F atoms in the plasma reactor, to generate a product including volatile fluorides and non-volatile fluorides;
wherein in the step S2, the plasma containing F atoms is generated by conversion of a fluorination medium; wherein the fluorination medium comprises one or more gases of CF₄, NF₃, F₂, HF, BrF₃, BrF₅, ClF₃, and SF₆;
S3, rapidly cooling the product at a cooling rate of 10⁴ K/s to 10⁹ K/s, to generate a gas-solid two-phase flow and a solid-state product;
S4, filtering the gas-solid two-phase flow to remove a solid-state product therein, then carrying out condensation, adsorption, desorption and distillation, to obtain a mixed gas containing UF₆ and PuF₆;
S5, performing a recovery process to the mixed gas to generate a corresponding oxide or metal.

2. The spent fuel dry reprocessing method of claim 1, wherein in the step S1, the spent fuel powder is delivered into the plasma reactor through a scroll feeder or a nozzle under an action of an inert carrier gas.

3. The spent fuel dry reprocessing method of claim 1, wherein in the step S1, the spent fuel powder has a particle diameter of no larger than 200 *µ* m.

4. The spent fuel dry reprocessing method of claim 1, wherein in the step S2, the plasma containing F atoms is generated by conversion of the fluorination medium via gas discharge and then delivered into the plasma reactor; or, the plasma containing F atoms is generated by conversion of the fluorination medium in the plasma reactor.

5. The spent fuel dry reprocessing method of claim 4, wherein the plasma containing F atoms is generated by at least one of a high-voltage discharge, a DC-arc discharge, a high-frequency discharge, a microwave discharge and a laser ionization.

6. The spent fuel dry reprocessing method of claim 1, wherein in the step S2, when the fluorination medium is F₂, chemical reaction formulas of UO₂ and U₃O₈ in the spent fuel powder reacting in the plasma reactor are represented by the following formulas (1) and (2):
UO₂+3F₂→UF₆+O₂ (1)
U₃O₈+9F₂→73UF₆+4O₂ (2)
wherein, chemical reaction formulas of PuO₂ in the spent fuel powder reacting in the plasma reactor are represented by the following formulas (3) to (5):
PuO₂+2F₂→PuF₄+O₂ (3)
PuO₂+3F₂→PuF₆+O₂ (4)
PuF₄+F₂↔PuF₆ (5)
wherein, the PuF₄ generated according to the formula (3) then reacts with a sufficient F₂ to promote the reaction of the formula (5) to the right end, so that the PuF₄ is completely converted into the PuF₆;
wherein, a chemical reaction formula of lanthanide in the spent fuel powder reacting in the plasma reactor is represented by the following formula:
2Ln₂O₃+6F₂→4LnF₃+3O₂ (6)
and wherein, chemical reaction formulas of minor actinides in the spent fuel powder reacting in the plasma reactor are represented by the following chemical formulas:
NpO₂+3F₂→NpF₆+O₂ (7)
NpO₂+2F₂→NpF₄+O₂ (8)
NpF₄+F₂↔ NpF₆ (9)
2Am₂O₃+6F₂→4AmF₃+3O₂ (10)
2Cm₂O₃+6F₂→4CmF₃+3O₂ (11)
wherein, the NpF₄ generated according to the formula (8) then reacts with a sufficient F₂ to promote the reaction of the formula (9) to the right end, so that the NpF₄ is completely converted into the NpF₆.

7. The spent fuel dry reprocessing method of claim 1, wherein in the step S2, a temperature of a reaction region in the plasma reactor is larger than 2000K; and a temperature of a wall of the plasma reactor is controlled below 950K.

8. The spent fuel dry reprocessing method of claim 1, wherein the step S5 comprises:
performing a dry or wet processing to the mixed gas of the UF₆ and the PuF₆ to obtain a mixed oxide of UO₂ and PuO₂, and HF; or,
the step S5 comprises: separating the UF₆ and the PuF₆ of the mixed gas, performing a dry or wet processing to the UF₆ to obtain UO₂ and HF, and performing a dry or wet processing to the PuF₆ to obtain PuO₂ and HF.

9. The spent fuel dry reprocessing method of claim 1, wherein the step S5 comprises:
performing an electromagnetic separation processing to the mixed gas of the UF₆ and the PuF₆ to obtain U, Pu, and F₂; or,
the step S5 comprises: separating the UF₆ and the PuF₆ of the mixed gas, performing an electromagnetic separation processing to the UF₆ to obtain metal U and F₂, and performing an electromagnetic separation processing to the PuF₆ to obtain metal Pu and F₂.

10. The spent fuel dry reprocessing method of any one of claims 1 to 9, wherein the spent fuel dry reprocessing method further comprises a step of:
S6, performing a recovery process to the solid-state product obtained from separation in the step S3 and the step S4.

## Patentansprüche

1. Plasma-basiertes Trockenwiederaufbereitungsverfahren für verbrauchten Brennstoff, wobei das Verfahren folgende Schritte umfasst:
S1, Aufbereiten eines verbrauchten Brennstoffs nach Entfernung einer Umhüllung davon zu einem Pulver aus verbrauchtem Brennstoff und Einspeisen des Pulvers aus verbrauchtem Brennstoff in einen Plasmareaktor;
S2, vollständiges Mischen und Umsetzen des Pulvers aus verbrauchtem Brennstoff mit einem Plasma, das F-Atome enthält, in dem Plasmareaktor, um ein Produkt zu erzeugen, das flüchtige Fluoride und nichtflüchtige Fluoride beinhaltet;
wobei in dem Schritt S2 das Plasma, das F-Atome enthält, durch Umwandlung eines Fluorierungsmediums erzeugt wird; wobei das Fluorierungsmedium ein oder mehrere Gase von CF₄, NF₃, F₂, HF, BrF₃, BrF₅, ClF₃ und SF₆ umfasst;
S3, schnelles Kühlen des Produkts mit einer Kühlrate von 10⁴ K/s bis 10⁹ K/s, um eine Gas-Feststoff-Zweiphasenströmung und ein Festkörperprodukt zu erzeugen;
S4, Filtern der Gas-Feststoff-Zweiphasenströmung, um ein Festkörperprodukt darin zu entfernen, dann Durchführen einer Kondensation, Adsorption, Desorption und Destillation, um ein Mischgas zu erlangen, das UF₆ und PuF₆ enthält;
S5, Durchführen eines Rückgewinnungsprozesses für das Mischgas, um ein entsprechendes Oxid oder Metall zu erzeugen.

2. Trockenwiederaufbereitungsverfahren für verbrauchten Brennstoff nach Anspruch 1, wobei in dem Schritt S1 das Pulver aus verbrauchtem Brennstoff durch einen Spiralförderer oder eine Düse unter einer Einwirkung eines inerten Trägergases in den Plasmareaktor eingebracht wird.

3. Trockenwiederaufbereitungsverfahren für verbrauchten Brennstoff nach Anspruch 1, wobei in dem Schritt S1 das Pulver aus verbrauchtem Brennstoff einen Partikeldurchmesser von nicht mehr als 200 µm aufweist.

4. Trockenwiederaufbereitungsverfahren für verbrauchten Brennstoff nach Anspruch 1, wobei in dem Schritt S2 das Plasma, das F-Atome enthält, durch Umwandlung des Fluorierungsmediums über eine Gasentladung erzeugt und dann in den Plasmareaktor eingebracht wird; oder das Plasma, das F-Atome enthält, durch Umwandlung des Fluorierungsmediums in dem Plasmareaktor erzeugt wird.

5. Trockenwiederaufbereitungsverfahren für verbrauchten Brennstoff nach Anspruch 4, wobei das Plasma, das F-Atome enthält, durch mindestens eines von einer Hochspannungsentladung, einer Gleichstrombogenentladung, einer Hochfrequenzentladung, einer Mikrowellenentladung oder einer Laserionisierung erzeugt wird.

6. Trockenwiederaufbereitungsverfahren für verbrauchten Brennstoff nach Anspruch 1, wobei in dem Schritt S2, wenn das Fluorierungsmedium F₂ ist, chemische Umsetzungsformeln von UO₂ und U₃O₈ in dem Pulver aus verbrauchtem Brennstoff, das in dem Plasmareaktor umgesetzt wird, durch die folgenden Formeln (1) und (2) dargestellt sind:
UO₂+3F₂→UF₆+O₂ (1)
U₃O₈+9F₂→3UF₆+4O₂ (2)
wobei die chemischen Umsetzungsformeln von PuO₂ in dem Pulver aus verbrauchtem Brennstoff, das in dem Plasmareaktor umgesetzt wird, durch die folgenden Formeln (3) bis (5) dargestellt sind:
PuO₂+2F₂→PuF₄+O₂ (3)
PuO₂+3F₂→PuF₆+O₂ (4)
PuF₄+F₂↔PuF₆ (5)
wobei das PuF₄, das nach der Formel (3) erzeugt wird, dann mit einer ausreichenden F₂-Menge umgesetzt wird, um die Umsetzung der Formel (5) bis zu dem richtigen Ende zu fördern, so dass das PuF₄ vollständig in das PuF₆ umgewandelt wird;
wobei eine chemische Umsetzungsformel von Lanthanid in dem Pulver aus verbrauchtem Brennstoff, das in dem Plasmareaktor umgesetzt wird, durch die folgende Formel dargestellt ist:
2Ln₂O₃+6F₂→4LnF₃+3O₂ (6)
und wobei chemische Umsetzungsformeln von minoren Actinoiden in dem Pulver aus verbrauchtem Brennstoff, das in dem Plasmareaktor umgesetzt wird, durch die folgenden chemischen Formeln dargestellt sind:
NpO₂+3F₂→NpF₆+O₂ (7)
NpO₂+2F₂→NpF₄+O₂ (8)
NpF₄+F₂↔NpF₆ (9)
2Am₂O₃+6F₂→4AmF₃+3O₂ (10)
2Cm₂O₃+6F₂→4CmF₃+3O₂ (11)
wobei das NpF₄, das nach der Formel (8) erzeugt wird, dann mit einer ausreichenden F₂-Menge umgesetzt wird, um die Umsetzung der Formel (9) bis zu dem richtigen Ende zu fördern, so dass das NpF₄ vollständig in das NpF₆ umgewandelt wird.

7. Trockenwiederaufbereitungsverfahren für verbrauchten Brennstoff nach Anspruch 1, wobei in dem Schritt S2 eine Temperatur eines Umsetzungsbereichs in dem Plasmareaktor größer als 2000 K ist; und eine Temperatur einer Wand des Plasmareaktors auf unter 950 K gesteuert wird.

8. Trockenwiederaufbereitungsverfahren für verbrauchten Brennstoff nach Anspruch 1, wobei der Schritt S5 Folgendes umfasst:
Durchführen eines Trocken- oder Nassaufbereitens für das Mischgas aus dem UF₆ und dem PuF₆, um ein Mischoxid aus UO₂ und PuO₂ und HF zu erlangen; oder,
der Schritt S5 Folgendes umfasst: Trennen des UF₆ und des PuF₆ des Mischgases, Durchführen eines Trocken- oder Nassaufbereitens für das UF₆, um UO₂ und HF zu erlangen, und Durchführen eines Trocken- oder Nassaufbereitens für das PuF₆, um PuO₂ und HF zu erlangen.

9. Trockenwiederaufbereitungsverfahren für verbrauchten Brennstoff nach Anspruch 1, wobei der Schritt S5 Folgendes umfasst: Durchführen eines elektromagnetischen Trennungsaufbereitens für das Mischgas aus dem UF₆ und dem PuF₆, um U, Pu und F₂ zu erlangen; oder,
der Schritt S5 Folgendes umfasst: Trennen des UF₆ und des PuF₆ des Mischgases, Durchführen eines elektromagnetischen Trennungsaufbereitens für das UF₆, um Metall U und F₂ zu erlangen, und Durchführen eines elektromagnetischen Trennungsaufbereitens für das PuF₆, um Metall Pu und F₂ zu erlangen.

10. Trockenwiederaufbereitungsverfahren für verbrauchten Brennstoff nach einem der Ansprüche 1 bis 9, wobei das Trockenwiederaufbereitungsverfahren für verbrauchten Brennstoff ferner folgenden Schritt umfasst:
S6, Durchführen eines Rückgewinnungsprozesses für das Festkörperprodukt, das aus der Trennung in dem Schritt S3 und dem Schritt S4 erlangt wurde.

## Revendications

1. Procédé de retraitement à sec pour combustible épuisé à base de plasma, dans lequel le procédé comprend les étapes suivantes :
S1, le traitement d'un combustible épuisé après retrait d'une gaine de celui-ci en une poudre de combustible épuisé, et l'envoi de la poudre de combustible épuisé dans un réacteur à plasma ;
S2, le mélange complet et la réaction de la poudre de combustible épuisé avec un plasma contenant F atomes dans le réacteur à plasma, pour générer un produit comportant des fluorures volatils et des fluorures non volatils ;
dans lequel à l'étape S2, le plasma contenant F atomes est généré par conversion d'un milieu de fluoration ; dans lequel le milieu de fluoration comprend un ou plusieurs gaz parmi CF₄, NF₃, F₂, HF, BrF₃, BrF₅, ClF₃et SF₆ ;
S3, le refroidissement rapide du produit à une vitesse de refroidissement de 10⁴ K/s à 10⁹ K/s, pour générer un écoulement biphasique gaz-solide et un produit à l'état solide ;
S4, le filtrage du flux biphasique gaz-solide pour en éliminer un produit à l'état solide, puis la réalisation d'une condensation, d'une adsorption, d'une désorption et d'une distillation, pour obtenir un gaz mixte contenant UF₆ et PuF₆ ;
S5, le fait d'effectuer un processus de récupération du gaz mixte pour générer un oxyde ou un métal correspondant.

2. Procédé de retraitement à sec pour combustible épuisé selon la revendication 1, dans lequel, à l'étape S1, la poudre de combustible épuisé est délivrée dans le réacteur à plasma à travers un dispositif d'alimentation à spirale ou d'une buse sous l'action d'un gaz porteur inerte.

3. Procédé de retraitement à sec pour combustible épuisé selon la revendication 1, dans lequel, à l'étape S1, la poudre de combustible épuisé présente un diamètre de particule ne dépassant pas 200 µ*m.*

4. Procédé de retraitement à sec pour combustible épuisé selon la revendication 1, dans lequel, à l'étape S2, le plasma contenant F atomes est généré par conversion du milieu de fluoration par l'intermédiaire d'une décharge de gaz puis délivré dans le réacteur à plasma ; ou, le plasma contenant F atomes est généré par conversion du milieu de fluoration dans le réacteur à plasma.

5. Procédé de retraitement à sec pour combustible épuisé selon la revendication 4, dans lequel le plasma contenant F atomes est généré par au moins l'une d'une décharge à haute tension, d'une décharge à arc CC, d'une décharge à haute fréquence, d'une décharge à micro-ondes et d'une ionisation laser.

6. Procédé de retraitement à sec pour combustible épuisé selon la revendication 1, dans lequel, à l'étape S2, lorsque le milieu de fluoration est F₂, les formules de réaction chimique de UO₂ et U₃O₈ dans la poudre de combustible épuisé réagissant dans le réacteur à plasma sont représentées par les formules (1) et (2) suivantes :
UO₂+3F₂→UF₆+O₂ (1)
U₃O₈+9F₂→3UF₆+4O₂ (2)
dans lequel les formules de réaction chimique de PuO₂ dans la poudre de combustible épuisé réagissant dans le réacteur à plasma sont représentées par les formules (3) à (5) suivantes :
PuO₂+2F₂→PuF₄+O₂ (3)
PuO₂+3F₂→PuF₆+O₂ (4)
PuF₄+F₂↔PuF₆ (5)
dans lequel, le PuF₄ généré selon la formule (3) réagit ensuite avec une quantité suffisante de F₂ pour favoriser la réaction de la formule (5) jusqu'à la bonne fin, de sorte que le PuF₄ est complètement converti en PuF₆ ;
dans lequel une formule de réaction chimique de lanthanide dans la poudre de combustible épuisé réagissant dans le réacteur à plasma est représentée par la formule suivante :
2Ln₂O₃+6F₂→4LnF₃+3O₂ (6)
et dans lequel les formules de réaction chimique d'actinides mineurs dans la poudre de combustible épuisé réagissant dans le réacteur à plasma sont représentées par les formules chimiques suivantes :
NpO₂+3F₂→NpF₆+O₂ (7)
NpO₂+2F₂→NpF₄+O₂ (8)
NpF₄+F₂↔NpF₆ (9)
2Am₂O₃+6F₂→4AmF₃+3O₂ (10)
2Cm₂O₃+6F₂→4CmF₃+3O₂ (11)
dans lequel, le NpF₄ généré selon la formule (8) réagit ensuite avec une quantité suffisante de F₂ pour favoriser la réaction de la formule (9) jusqu'à la bonne fin, de sorte que le NpF₄ est complètement converti en NpF₆.

7. Procédé de retraitement à sec pour combustible épuisé selon la revendication 1, dans lequel, à l'étape S2, une température d'une zone de réaction dans le réacteur à plasma est supérieure à 2 000 K ; et une température d'une paroi du réacteur à plasma est commandée en dessous de 950 K.

8. Procédé de retraitement à sec pour combustible épuisé selon la revendication 1, dans lequel l'étape S5 comprend :
le fait d'effectuer un traitement à sec ou humide du gaz mixte de l'UF₆ et du PuF₆ pour obtenir un oxyde mixte d'UO₂ et de PuO₂, et de HF ; ou,
l'étape S5 comprend : la séparation de l'UF₆ et du PuF₆ du gaz mixte, la réalisation d'un traitement à sec ou humide de l'UF₆ pour obtenir de l'UO₂ et du HF, et la réalisation d'un traitement à sec ou humide du PuF₆ pour obtenir du PuO₂ et du HF.

9. Procédé de retraitement à sec pour combustible épuisé selon la revendication 1, dans lequel l'étape S5 comprend : la réalisation d'un traitement de séparation électromagnétique du gaz mixte UF₆ et du PuF₆ pour obtenir U, Pu et F₂ ; ou,
l'étape S5 comprend : la séparation de l'UF₆ et du PuF₆ du gaz mixte, la réalisation d'un traitement de séparation électromagnétique de l'UF₆ pour obtenir du métal U et F₂ et la réalisation d'un traitement de séparation électromagnétique du PuF₆ pour obtenir du métal Pu et F₂.

10. Procédé de retraitement à sec pour combustible épuisé selon l'une quelconque des revendications 1 à 9, dans lequel le procédé de retraitement à sec pour combustible épuisé comprend également une étape consistant à :
S6, effectuer un processus de récupération du produit à l'état solide obtenu à partir de la séparation à l'étape S3 et à l'étape S4.
